# EUROPEAN PATENT SPECIFICATION

(11) **EP 1 042 910 B1**
(45) Date of publication and mention of the grant of the patent: **13.08.2008**
(21) Application number: 98963282.3
(22) Date of filing: 21.12.1998
(51) Int. Cl.: H04N 3/20, H04N 5/59, G09G 1/16

(54) **AUTOMATIC SCREEN SAVER**
AUTOMATISCHER BILDSCHIRMSCHONER
PROGRAMME AUTOMATIQUE DE PROTECTION D'ECRAN

(30) Priority: 29.12.1997 US 68712 P
(43) Date of publication of application: 11.10.2000
(73) Proprietor: Thomson Licensing, 92100 Boulogne-Billancourt (FR)
(72) Inventor: GRIEPENTROG, Dal, Frank, Indianapolis, IN 46254 (US)
(74) Representative: Arnold, Klaus-Peter
(86) International application number: PCT/US1998/027126
(87) International publication number: WO 1999/034593

(56) References cited:
- JP-A- 9 006 273
- JP-A- 9 327 031
- US-A- 4 253 121

## Description

### Field of The Invention

The present invention generally relates to a screen saver apparatus and method, and in particular, to a screen saver apparatus and method based on monitoring the various changes of the signal representing an image being processed.

### Background of the Invention

Screen saver applications for computer systems are well known. The purpose of a screen saver application is to prevent the burning of a fixed pattern onto the phosphor screen of a display, when there is little or no screen activity. The common way of detecting this inactivity is to monitor whether there is any user keyboard input. In other words, a timer is started after each keyboard entry and if the timer expires before another entry, then the screen saver application will cause the screen to go blank or display a predetermined moving image, thereby preventing screen burn. The screen will be restored as soon as another keyboard entry is detected.

Other prior screen saver systems take the approach of looking at the motion of the images being displayed. For example, Japanese Patent No.JP-A-6332418, assigned to Fujitsu General Ltd. of Japan, discloses a screen saver apparatus having a motion adaption circuit. The motion adaption circuit examines a video signal and determines the motion characteristics of the corresponding image. If a still picture is detected, a timer is started. If the still picture is displayed after a predetermined time period, the power supply to the display is cut off, thereby preventing screen burn. These motion based systems are, however, complicated and typically requires costly digital processing circuitry to determine whether a motion is present. In addition, these systems enable the screen saver function based solely on the motion factor and nothing else, which may cause unnecessary blanking of the screen.

A signal processing apparatus according to the preamble of claim 1 is known from US-A-4253121. In JP-A-09-006273 a display device with a screen saver function is disclosed, which comprises average picture level (APL) detectors which detect the APL of an image signal every specified period.

JP-A-09327031 discloses a screen saver circuit based on the detection of the peak value of the beam current and the detection of motion in an image.

The invention is set out in claims 1 and 2.

The present inventor recognizes the advantages of being able to implement a screen saver function for a multi-media display in a cost effective manner, preferably using the circuitry that is already being used for other functions.

In addition, the present inventor recognizes that there is no need to blank the screen, even if the screen is static for a period of time, if the image being displayed has characteristics that do not exceed certain thresholds. In other words, even if a screen image is static, there may be little chance of screen burn if the image being displayed is of low brightness and/or contrast, for example.

Therefore, in one exemplary embodiment, a method and system for implementing a screen saver function is described. A peak value of a characteristic such as beam current magnitude of a video signal being processed is determined. An average value of the same characteristic of the video signal is also determined. Changes in this average value is additionally monitored. Therefore, the characteristic of the video signal is adjusted only if the peak value exceeds a first threshold and a change less than a second threshold is detected in the average value.

### Brief Description of the Drawings

Fig. 1 shows a block diagram of an exemplary embodiment of the video processing apparatus in accordance with the present invention.
Fig. 2A shows in detail an exemplary circuitry for implementing an exemplary embodiment of the present invention.
Fig. 2B shows in detail another exemplary circuitry for implementing the present invention.
Fig. 3 shows a process diagram of an exemplary embodiment of the present invention.

### Detailed Description of the Drawings

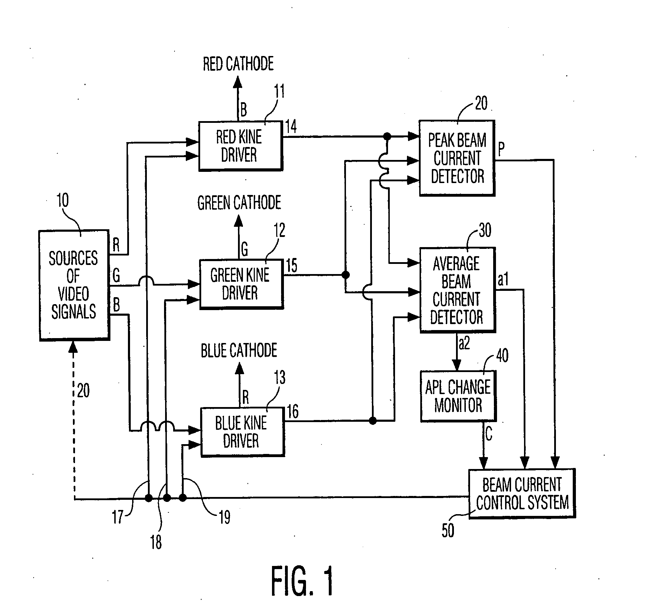

Fig. 1 shows a block diagram of an exemplary embodiment of the video processing apparatus in accordance with the present invention. A source of video signals are shown having low level color signals red (r), green (g) and blue(b). The sources of the signals may be from a device such as a television receiver, a computer, etc. Each of the respective signals r, g, b is coupled to a respective one of driver amplifiers 11-13. Each of the driver amplifiers 11-13 provides a respective output signal Red(R), Green(G) or Blue(B) to drive a respective node of a display device (not shown), such as a respective cathode of a kinescope or a cathode ray tube (CRT).

Additionally, a peak beam current detector 20 is coupled to current measurement outputs 14-16 from each of the driver amplifiers 11-13 respectively. Each of the current measurement outputs provides a signal representing the magnitude of the cathode current going into the respective node of the display device. The peak beam current detector 20 provides an output signal p which indicates the magnitude of one of the cathode currents of the driver amplifiers 11-13. This output signal p is fed to a beam current control system 50 whose function will be described in detail below.

The current measurement outputs 14-16 are also coupled to an average beam current detector 30. The function of the average beam current detector 30 is to provide an output signal a2 which indicates the average beam current value of the cathode currents.

Output signal a2 is then coupled to an APL change monitor. The present inventor has recognized that monitoring the changes in the Average Picture Level (APL) of a video signal is an efficient and cost effective way to determine whether the corresponding image is static or not. The inventor has further recognized that an effective way to monitor changes in the APL is to look, instead, at changes in the average beam current. In other words, a change in APL indicates a change in motion in a video image; and a change in the average beam current indicates a change in the APL. Therefore, the exemplary embodiment of Fig. 1 monitors changes in the average beam current for determining whether the display is static or not, according to an aspect of the present invention.

Hence, the APL change monitor 40 monitors output signal a2 indicating magnitude of an average beam current from the detector 30, and in response, provides an output signal c indicating whether there is a change in the APL. This output signal c is also coupled to beam current control system 50 of the video apparatus as shown in Fig. 1.

Another exemplary output of the average beam current detector 30 is signal a1 which is coupled directly to the beam current control system 50 of the present invention. Output signal a1 indicates an average value of beam currents being processed. Signal a1 is commonly used by the beam current control system 50 to adjust the D.C. level of the video apparatus, as disclosed for example, in U.S. Pat. No. 4, 253,121, issued in the name of Avery on Feb. 24, 1981.

In addition to receiving signal al, the beam current control system 50 also receives signals p and c which are generated as described above. In response to these input signals, beam current control system 50 provides control signals 17-19 for adjusting the kine drive currents R, G, and B of the driver amplifiers 11-13. In addition, beam current control system 50 may adjust the brightness and/or contrast of the video signals from the video signal sources by providing control signal 20 in a known manner.

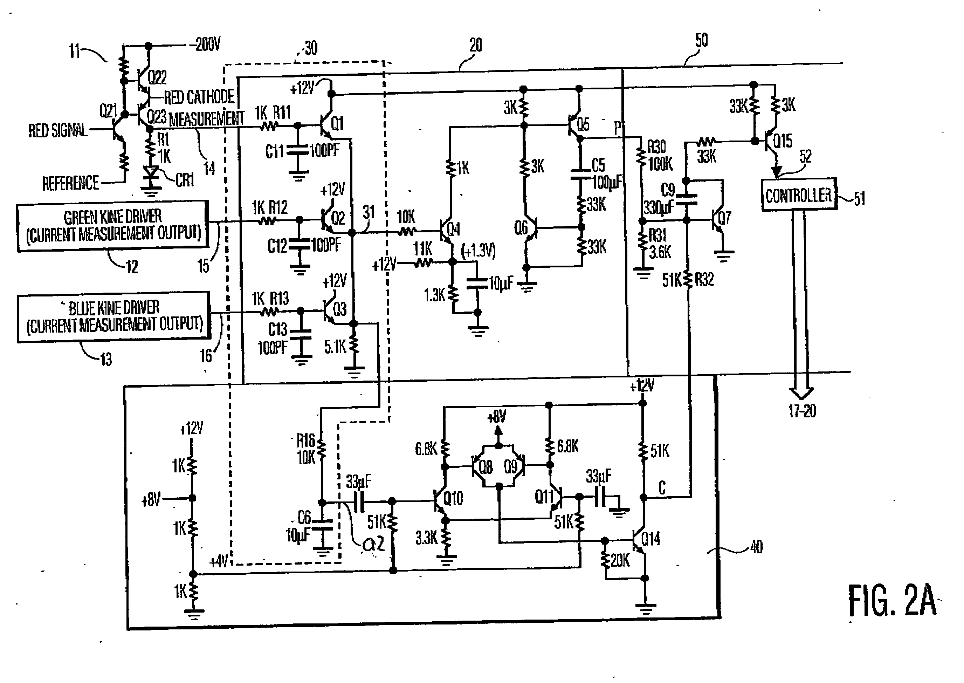

Fig. 2A shows an example of the detailed implementation of apparatus shown in Fig. 1.

A typical kine driver amplifier 11 is shown having transistors Q21-Q23. The red signal (r) from the signal source 10 shown in Fig. 1 is connected as the input at the base of transistor Q21. The output of the driver 11 is taken from the emitter of transistor Q22 and is connected to the red cathode node of a display such as a CRT, for example (not shown).

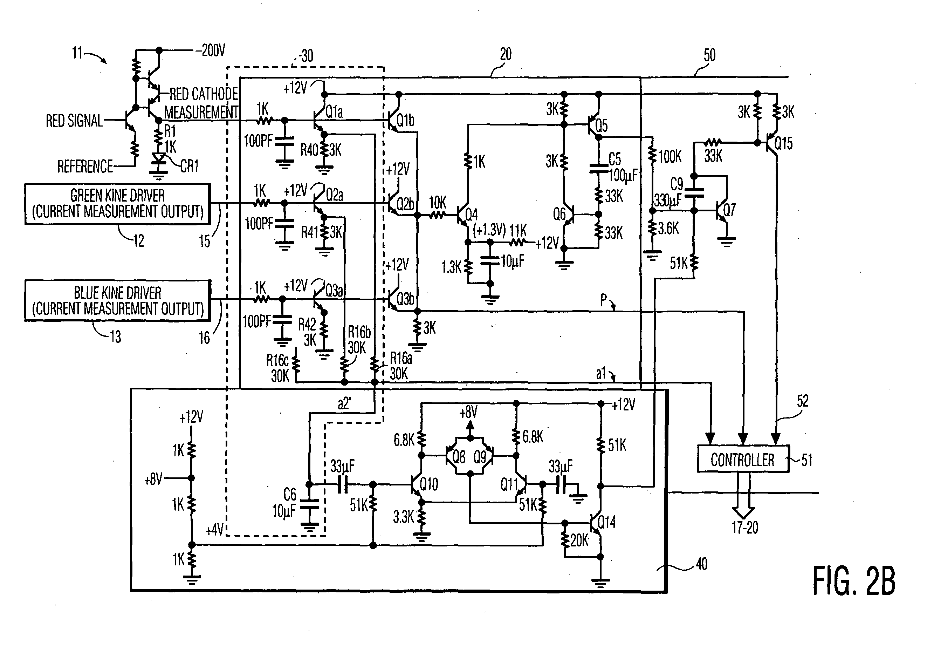

A measurement resistor R1 is connected in series with a measurement diode CR1 at the collector of the PNP buffer transistor Q23. The collector of transistor Q23 also serves as the current measurement output 14. The measurement output 14 is coupled to both detectors 20 and 30 as described below and shown in both Figs. 1 and 2. Green and blue driver amplifiers 12 and 13 have the same construction as that of the red driver amplifier 11 and therefore are not shown or discussed in detail.

The operation of the peak beam current detector 20 will be described first with respect to the exemplary embodiment of the present invention shown in Fig. 2A. A cathode current of 2 ma in either of the red, green or blue driver amplifier will produce about 2 volts at the emitters of Q1, Q2 or Q3. This is because, in the case of Q1, the voltage drop across diode CR1 and resistor R1 matches the base-to-emitter voltage drop of transistor Q1. Similar arrangements of measurement diodes and resistors for driver amplifiers 12 and 13 are used but not shown. The highest cathode current of the three measurement outputs is then detected at point 31 of detector 20.

The emitter of transistor Q4 is biased such that Q4 conducts when the highest cathode current exceeds 2 ma. This conduction causes transistors Q5 and Q6 to latch on until capacitor C5 charges up. A continuous level of a beam current above 2 ma will cause Q5 to remain saturated. Therefore, output p of the peak beam current detector 20 will go high, when one of the cathode beam currents R, G, B exceeds 2 ma.

The operation of the average beam current detector 30 will now be described. Circuit 30 is shown enclosed by dotted lines. Circuit 30 shares part of its circuitry with detector 20 described above, namely components Q1-Q3 and associated resistors R11-R13, and capacitors C11-C13. As described above, output 31 from these components is a signal representing the magnitude of the highest beam current in either of the red, green or blue drivers 11-13. This output 31 is then connected to an integrator formed by R16 and C6 connected in series. Output a2 from the integrator of R16-C6 thus represents the average value of the highest beam current detected.

This filtered output signal a2 is then connected to an input of an APL change monitor 40. As shown in Fig. 2A, an exemplary APL monitor comprises a differential comparison circuit comprising of Q8-Q14. A change in the input level a2 either positive or negative causes either Q8 or Q9 to conduct and therefore causes Q14 to conduct. The output of Q14 is therefore high when there is no change in the average beam current, indicating that the displayed image is static.

An example of a beam current control system is shown as block 50 which receives signals from outputs p and c of detectors 20 and 40 respectively. These signals are coupled through resistors R30 and R32 respectively to a transistor Q7. Transistor Q7 will conduct slowly and causes Q15 to conduct slowly when the peak beam current detector 20 indicates that 2 ma is exceeded in one of the beam currents (i.e., Q5 has a high output), and detector 30 senses no change in APL (i.e., Q14 output is high) indicating no motion. The filter capacitor C9 is connected in a feedback path to produce a long time constant.

The current output of Q15 may be connected to, for example, a video controller or microprocessor 51 which monitors the sense point 52 and in response, provide beam current drive control signals 17-19, and/or 20 as shown in Fig. 1, and discussed above. Alternatively, sense point 52 of Q15 may be connected to an analog circuit or discrete logic which may provide equivalents of control signals 17-19, and/or 20, in a known manner.

Fig. 2B also shows in detail, another exemplary embodiment in circuit diagram form of the present invention. Since most of circuitry shown in Fig. 2B is similar as that shown in Fig. 2A, Fig. 2B will not be discussed in detail.

The main difference between the embodiment shown in Fig. 2A and Fig. 2B is the addition of transistors Q1a - Q3a and their associated resistors R16a-R16c and R40-R42 in Fig. 2B. Because of the addition of these components, a signal a1 is now available. Signal a1 represents an average of all three beam currents R, G, B in the respective kine driver amplifiers 11-13 as shown in block diagram of Fig. 1 and was discussed above in connection with Fig. 1. Signal a1 in Fig. 2B is then coupled to beam current control system 50, and it is used to control, for example, the D.C. level of the video signal sources r, g, and b, as discussed above, in connection with Fig. 1.

Additionally, the same signal may also be used by APL change monitor 40 to determine whether or not there is a change of motion in the video signal. This signal is indicated by signal a2' in Fig. 2B. In other words, signal a2' in Fig. 2B indicates a value of the average of all three beam currents R, G, B, whereas signal a2 in Fig. 2A indicates the average value of the highest beam current of the three beam currents R, G, B, as described in connection with Fig. 2A.

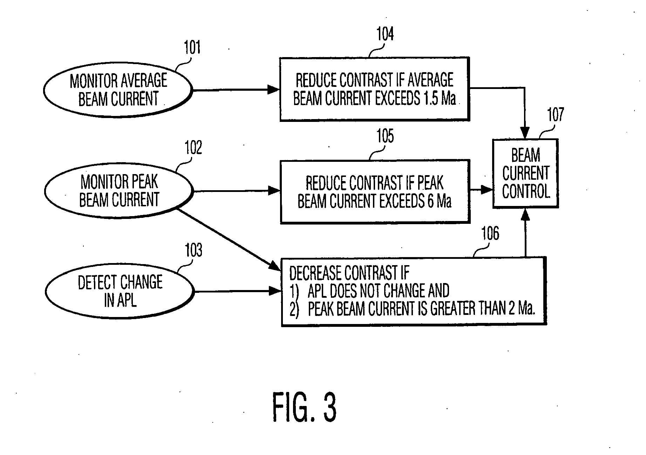

Fig. 3 shows the process of implementing a screen saver function in accordance with the present invention. The steps will now be explained in connection with the embodiments shown in Figs. 1 and 2.

As shown in step 101 of Fig. 3, signal a1 representative of the average beam current of a video signal being processed is monitored by the beam current control system 50 of Fig. 1. If, for example, the average beam current being monitored exceeds a first predetermined level such as, for example, 1.5 ma, a control signal is generated to reduce the contrast of the displayed video signal, as shown in steps 104 and 107 of Fig. 3.

As shown in step 102, another signal p representative of the peak value of a characteristic such as the beam current magnitude of the video signal being processed is also monitored by the beam current control system 50 of Fig. 1. If, for example, the peak beam current being monitored exceeds another predetermined level such as, for example, 6 ma, a control signal is also generated to adjust the beam current magnitude of the displayed video signal, as shown in steps 105 and 107 of Fig. 3.

Finally, as shown in step 103, changes in the Average Picture Level (APL) is also monitored to determine whether there is motion in the image being processed. As described before, changes in the APL may be determined by monitoring changes in the average value of beam current magnitude, as shown in the exemplary circuits 30 and 40 of Figs. 2A or 2B. Therefore, as shown in steps 106 and 107, only when peak beam current exceeds another predetermined level, such as, for example, 2 ma and when no chang in APL (e.g., APL change does not exceed a certain threshold), will a control signal be generated to adjust the beam current characteristic of the displayed video signal. Although steps 104-106 show only the process of reducing contrast of the video signal as examples of beam current control, it would also be feasible to reduce the brightness of the video signal, or to reduce both the contrast and the brightness to achieve the desired results.

The invention described above relates to an implementation of a screen saver function. The invention allows a display to operate at maximum average and peak beam currents if the displayed pattern is changing with time, and would operate at reduced peak beam current (e.g., 2 ma) when no change, or a change less than a threshold in pattern is detected. The maximum peak beam current capability (e.g., 6 ma) would be restored when the pattern changes. This screen saver function is especially helpful for projection display monitors since it is advantageous to be able to operate a projection display at maximum peak and average beam current for easier viewing. This invention of course could be used with any monitor, such as a computer monitor or a television display.

It is to be understood that the embodiments and variations shown and described herein are for illustrations only and that various modifications may be implemented by those skilled in the art without departing from the scope of the invention.

## Claims

1. A signal processing apparatus for processing a video signal (r, g, b), comprising
a peak detector (20) coupled to said video signal (r, g, b) for determining a peak beam current value corresponding to said video signal;
an average detector (30) coupled to said video signal (r, g, b) for determining an average beam current value corresponding to said video signal; **characterized by**
means (40) coupled to said average detector (30) for determining motion in a video image by monitoring changes in said average beam current value corresponding with an average picture level; and
a controller (50) for adjusting a characteristic of said video signal so as to reduce a beam current, said adjustment being made in response to said peak beam current value exceeding a third threshold, in response to said average beam current value exceeding a first threshold, and in response to a change less than a second threshold in said average picture level.

2. The apparatus of claim 1, wherein said means (40) coupled to said average detector (30) for determining motion in a video image is an APL change monitor.

## Patentansprüche

1. Signalverarbeitungsgerät zum Verarbeiten eines Videosignals (R, G, B), umfassend:
einen Spitzenwertdetektor (20), der mit dem Videosignal (R, G, B) gekoppelt ist, um einen Spitzenwert des Strahlstromwertes zu bestimmen, der dem Videosignal entspricht;
einen Mittelwertdetektor (30), der mit dem videosignal (R, G, B) gekoppelt ist, um einen mittleren Strahlstromwert zu bestimmen, der dem Videosignal entspricht; **gekennzeichnet durch**
Mittel (40), die mit dem Mittelwertdetektor (30) gekoppelt sind, um Bewegung in einem Videobild **durch** Überwachen von Veränderungen in dem mittleren Strahlstromwert zu bestimmen, der einem mittleren Bildpegel entspricht; und
eine Steuereinheit (50) zum Einstellen einer Kenngröße des Videosignals, damit ein Strahlstrom reduziert wird, wobei die Einstellung als Reaktion auf den Spitzenwert des Strahlstromwertes vorgenommen wird, der einen dritten Schwellenwert übersteigt, als Reaktion auf den mittleren Strahlstromwert, der einen ersten Schwellenwert überschreitet, und als Reaktion auf eine Veränderung in dem mittleren Bildpegel, die geringer als ein zweiter Schwellenwert ist.

2. Gerät nach Anspruch 1, wobei die Mittel (40), die mit dem Mittelwertdetektor (30) gekoppelt sind, um Bewegung in einem Videobild zu bestimmen, aus einem Monitor der Veränderung des mittleren Bildpegels bestehen.

## Revendications

1. Système de traitement de signal pour traiter un signal vidéo (r (rouge), v (vert), b (bleu)), comportant
un détecteur de valeur de crête (20) auquel est appliqué ledit signal vidéo (r, v, b) qui sert à déterminer une valeur de crête de courant de faisceau correspondant audit signal vidéo ;
un détecteur de valeur moyenne (30) auquel est appliqué ledit signal vidéo (r, v, b) qui sert à déterminer une valeur moyenne de courant de faisceau correspondant audit signal vidéo ;
**caractérisé par**
un moyen (40) relié audit détecteur de valeur moyenne (30) qui sert à déterminer un mouvement dans une image vidéo en surveillant les variations intervenant dans ladite valeur moyenne de courant de faisceau correspondant à un niveau d'image moyen : et
un contrôleur (50) qui permet de régler une caractéristique dudit signal vidéo de façon à réduire un courant de faisceau, ledit réglage se faisant en réponse au dépassement par ladite valeur de crête du courant de faisceau d'un troisième seuil, en réponse au dépassement par ladite valeur moyenne de courant de faisceau d'un premier seuil et en réponse à une variation inférieure à un deuxième seuil dudit niveau d'image moyen.

2. Système selon la revendication 1, dans lequel ledit moyen (40) relié audit détecteur de valeur moyenne (30) servant à déterminer un mouvement dans une image vidéo est un appareil de surveillance de variation de niveau APL (Average Picture Level - Niveau d'image moyen).
